# DEMANDE DE BREVET EUROPEEN

(11) **EP 2 338 391 A1**
(43) Date de publication de la demande: **29.06.2011**
(21) Numéro de dépôt: 10306476.2
(22) Date de dépôt: 21.12.2010
(51) Int. Cl.: A47J 27/086, A47J 27/00, A47J 36/16, A47J 27/08

(54) **Appareil électrique de cuisson des aliments**

(30) Priorité: 23.12.2009 FR 0906318
(71) Demandeur: SEB SA, 69130 Ecully (FR)
(72) Inventeur: Pellerin, Olivier, 69300, CALUIRE ET CUIRE (FR); Pontabry, Florent, 21000, DIJON (FR); Seurat, Frédéric, 21490, BRETIGNY (FR)
(74) Mandataire: Cémeli, Eric Philippe Laurent

(57) **Abrégé**

L'invention concerne un appareil électrique de cuisson sous pression pour aliments comprenant un boîtier (1) et un couvercle (4) formant l'enveloppe extérieure de l'appareil, une contre-cuve (2) formant l'enceinte intérieure de l'appareil, un élément chauffant (25) placé dans le fond de la contre-cuve (2), une cuve (3) amovible formant le récipient de cuisson (30) des aliments, caractérisé en ce que la cuve (3) comprend au moins une poignée (31) de préhension s'étendant au-delà de la périphérie du boîtier (1).

## Description

La présente invention concerne un appareil électrique de cuisson des aliments et plus particulièrement un appareil qui assure notamment la cuisson sous pression.

Il existe dans le domaine public des autocuiseurs utilisés pour la cuisson sous pression des aliments. Ces autocuiseurs nécessitent une source externe de chaleur (provenant par exemple d'une cuisinière électrique). L'autocuiseur comprend une valve tarée en pression de façon à réguler la pression régnant à l'intérieur de l'enceinte de cuisson.

Il est également connu, notamment des documents CN1522636, JP2006325843, des autocuiseurs électriques. Ces appareils comprennent essentiellement un boîtier dans lequel sont logées une cuve et une contre-cuve. La cuve permet la cuisson des aliments. La contre-cuve constitue l'enceinte de chauffage de la cuve. Les autocuiseurs électriques comprennent habituellement un couvercle articulé sur le boîtier. Le couvercle est verrouillé sur la cuve de façon à assurer la montée en pression pour la cuisson des aliments.

En fin de cuisson des aliments, la cuve est alors très chaude. Pour récupérer les aliments cuits il faut, soit utiliser un crochet ou une poignée amovible pour retirer la cuve de l'appareil soit retirer les aliments de la cuve avec un ustensile (cuillère, fourchette...).

De même, l'introduction des aliments dans l'appareil doit se faire de préférence lorsque la cuve est déjà placée dans le boîtier. En effet, lorsque la cuve contient des aliments, sa manipulation devient difficile puisque par construction il n'y pas qu'un simple rebord sur la cuve.

La présente invention vise à proposer un appareil électrique de cuisson des aliments dont la cuve peut-être manipulée facilement.

Ce but est atteint par un appareil électrique de cuisson pour aliments comprenant un boîtier et un couvercle formant l'enveloppe extérieure de l'appareil, une contre-cuve formant l'enceinte intérieure de l'appareil, un élément chauffant placé dans le fond de la contre-cuve, une cuve amovible formant le récipient de cuisson des aliments, caractérisé en ce que la cuve comprend au moins une poignée de préhension s'étendant au-delà de la périphérie du boîtier.

Ainsi, l'architecture de l'appareil a été modifiée afin de pouvoir équiper la cuve d'une poignée permettant alors une manipulation plus aisée et plus sûre de la cuve. De plus, les poignées étant placées à l'extérieur de l'appareil, leur température reste dans des valeurs suffisamment basses pour éviter les brûlures.

Selon d'autres caractéristiques additionnelles :
- le couvercle comprend des moyens de verrouillage sur la contre-cuve.
- les moyens de verrouillage comprennent au moins deux mâchoires mobiles de façon radiale par rapport au couvercle.
- chaque mâchoire est solidaire d'une tige dont une extrémité est engagée dans un dispositif de commande monté rotatif sur le couvercle.
- le dispositif de commande est solidaire d'une poignée de préhension du couvercle.
- les moyens de verrouillage comprennent un dispositif de blocage en position verrouillée.
- le couvercle est amovible.
- le couvercle comprend un joint prenant appui sur le bord supérieur de la cuve lorsque le couvercle est fermé.
- l'appareil comprend un bac amovible de récupération des condensats monté dans un logement de la paroi latérale du boîtier.

D'autres particularités et avantages de la présente invention apparaîtront dans la description d'un mode de réalisation donné à titre d'exemple non limitatif et illustré par les dessins mis en annexe dans lesquels :
La figure 1 est une vue en perspective éclatée, d'un appareil électrique de cuisson des aliments conforme à l'invention,
La figure 2 est une vue de côté d'un appareil électrique de cuisson des aliments conforme à l'invention
La figure 3 est une vue en coupe selon la section A-A de la figure 2.
La figure 4 est une vue en coupe selon un plan longitudinal perpendiculaire à la section A-A de la figure 2.
Et la figure 5 est une vue en perspective partielle du couvercle d'un appareil électrique de cuisson des aliments conforme à l'invention.

L'appareil électrique de cuisson des aliments selon l'invention est également appelé autocuiseur électrique.

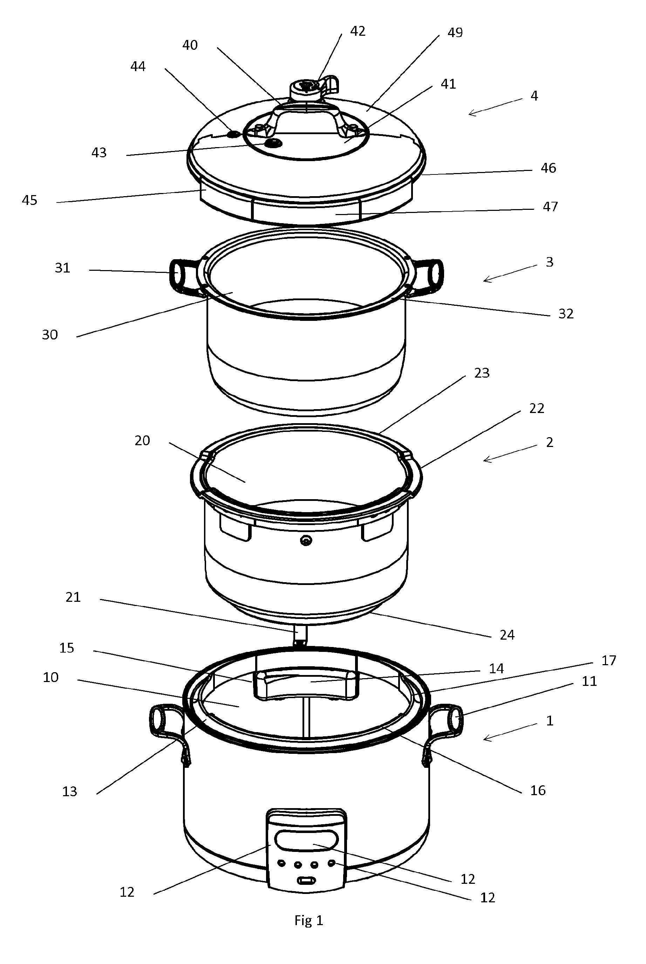

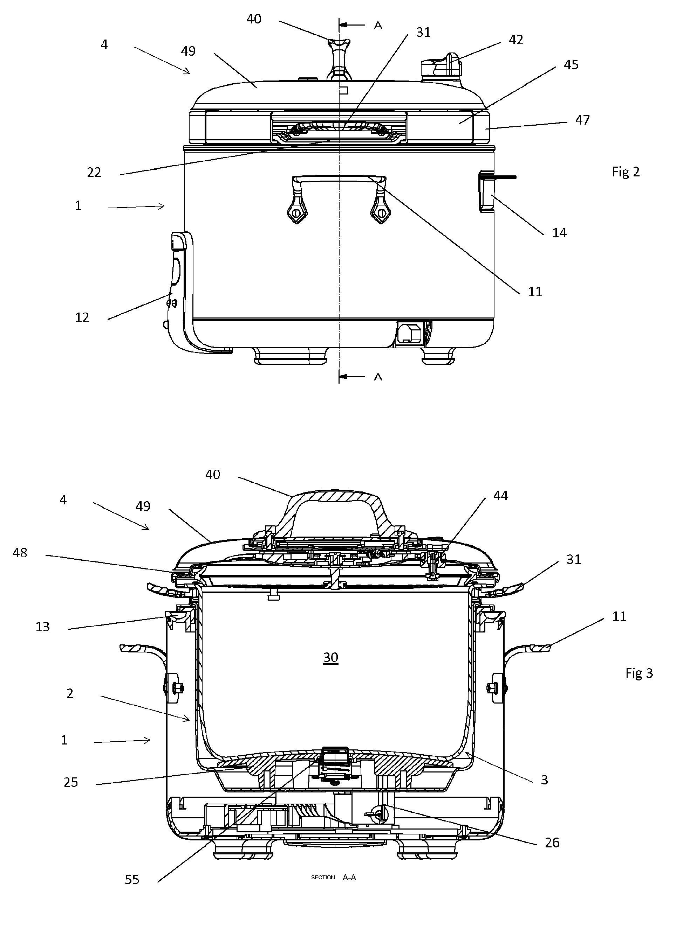

Selon les figures 1 et 2, l'appareil comprend essentiellement un boîtier 1 fermé par un couvercle 4. L'intérieur 10 du boîtier 1 est prévu pour recevoir une contre-cuve 2. La contre-cuve 2 correspond à l'enceinte de chauffage de l'appareil. Le fond de la contre-cuve 2 comprend pour ce faire au moins un élément chauffant décrit ultérieurement. La cuisson des aliments est réalisée dans une cuve 3 placée dans la contre-cuve 2 sur le(s) élément(s) chauffant(s).

Le boîtier 1 et le couvercle 4 forment l'enveloppe extérieure de l'appareil. Le boîtier 1 est de forme sensiblement cylindrique et comprend des poignées 11 de préhension diamétralement positionnées sur la paroi externe du boîtier 1. Les poignées 11 sont placées dans la moitié supérieure du boîtier 1. La paroi externe du boîtier 1 peut être réalisée en métal ou en plastique.

Le boîtier 1 comprend également un panneau 12 de commande de l'appareil permettant de contrôler les éléments chauffants de l'appareil. Le panneau 12 est placé, par exemple, dans la moitié inférieure du boîtier 1 et sensiblement entre les deux poignées 11. Le panneau 12 de commande comprend plusieurs boutons permettant à l'utilisateur de choisir le mode et la durée de cuisson des aliments.

Le bord supérieur 13 du boîtier 1 comprend un rebord formant une goulotte ou une gouttière. Cette gouttière est destinée à collecter les condensats qui pourraient résulter de la cuisson des aliments. Le boîtier 1 comprend également un bac 14 de récupération des condensats monté dans un logement 15 de la paroi latérale du boîtier 1. Le bac 14 est placé sous la gouttière qui comprend un trou à la verticale du bac pour permettre l'écoulement des condensats. Selon la variante de réalisation le bac 14 de récupération des condensats est amovible par l'extérieur du boîtier 1.

La paroi de boîtier 1 peut comprendre des ouvertures (non représentées) par exemple dans la moitié supérieure du boîtier 1. Ces ouvertures permettent de limiter l'élévation de température à l'intérieur du boîtier 1 lors des phases de cuisson.

La contre-cuve 2 est de forme sensiblement cylindrique et ses dimensions sont inférieures aux dimensions intérieures du boîtier 1. Ainsi, un espace est ménagé entre la contre-cuve 2 et la paroi intérieure du boîtier 1. De même, le fond 24 de la contre-cuve 2 comprend des pieds 21 qui viennent reposer sur le fond du boîtier 1. Ces pieds 21 permettent également de fixer la contre-cuve 2 au fond du boîtier 1. La contre-cuve 2 définit également l'enceinte 20 de chauffage de la cuve 3. Le fond de cette enceinte 20 de chauffage comprend les éléments chauffants (non représentés). Le bord supérieur de la contre-cuve 2 comprend un épaulement 23 qui prend appui sur le bord supérieur 13 du boîtier 1 lorsque la contre-cuve 2 est en position. L'épaulement 23 comprend au moins deux méplats ou décrochements 22 pour l'emplacement des poignées 31 de la cuve 3. De même, le bord supérieur 13 du boîtier 1 comprend au moins deux encoches 17 au niveau des méplats 22 pour le positionnement de la contre-cuve 2 dans le boîtier 1.

La cuve 3 constitue le récipient ou l'enceinte de cuisson 30 des aliments de l'appareil électrique selon l'invention. Selon l'invention, la cuve 3 est amovible et comprend au moins une poignée 31 de préhension.

Selon la variante représentée aux figures, la cuve 3 comprend deux poignées 31 positionnées de façon diamétralement opposée sur le bord 32 de la cuve 3. Le bord 32 peut former un épaulement par rapport à la paroi de la cuve 2. Les poignées 31 peuvent alors être fixées sur cet épaulement. Selon une autre variante, les poignées 31 peuvent être fixées sur le flanc de la cuve 3. Les poignées 31 peuvent être à anse comme celles représentées. Toutefois, d'autres formes de poignées peuvent être adoptées (bouton, manche...). La surface intérieure de la cuve 3 peut être revêtue d'un revêtement anti-adhérent de type PTFE. De même, le fond de la cuve 3 peut être bombé.

Le couvercle 4 comprend principalement des moyens de verrouillage 41, 43, 45 sur le boîtier 1, une valve 42 pour dépressuriser l'enceinte de cuisson 30, une valve 44 de sécurité, une poignée 40 pour manoeuvrer le couvercle et un capot 49 qui permet de masquer les moyens de verrouillage 41, 43, 45. Selon la variante représentée le couvercle 4 est amovible, c'est-à-dire qu'il peut être complètement désolidarisé du boîtier 1. Toutefois, la mise en place d'un couvercle 4 articulé sur le boîtier 1 est également envisageable.

La forme et la structure de la valve 42 de dépressurisation sont connues en soi. La valve 42 est manoeuvrable par l'utilisateur de sorte qu'il peut choisir soit une cuisson sans pression en plaçant la valve 42 en position ouverte ou une cuisson sous pression en plaçant la valve 42 en position fermée. De même, à l'issue d'une cuisson sous pression, l'utilisateur peut placer la valve 42 en position ouverte pour décompresser l'enceinte de cuisson 30.

La valve 42 de dépressurisation est également destinée à assurer une décompression automatique de l'enceinte de cuisson 30, si la pression dépasse un seuil déterminé. A titre d'exemple, la valve de sécurité est tarée à 100kPa.

La valve 44 permet d'empêcher l'ouverture du couvercle si la pression à l'intérieur de la cuve est supérieure à un seuil déterminé, par exemple de 4kPa.

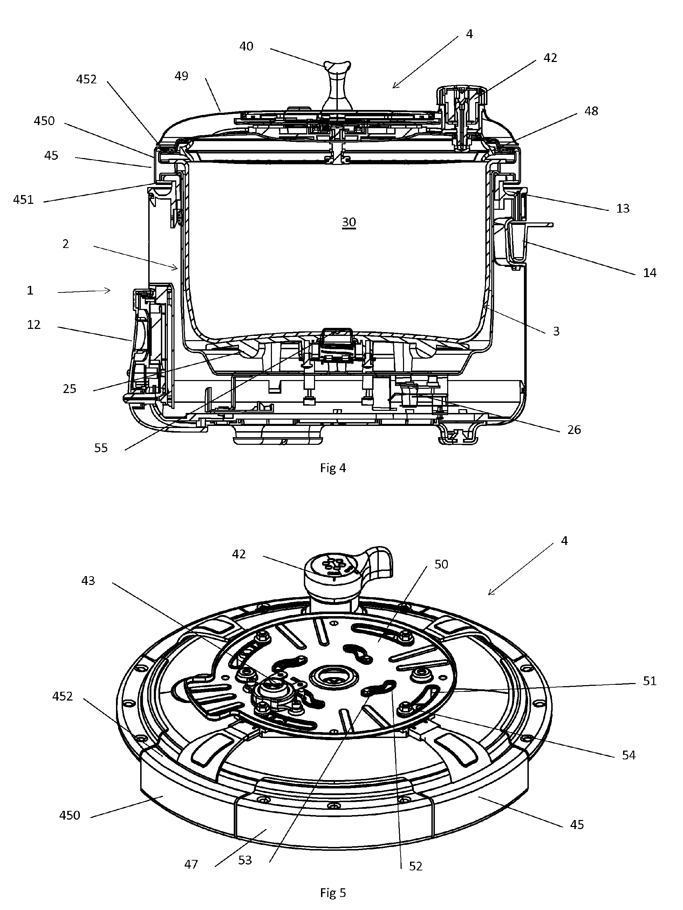

Les moyens de verrouillage du couvercle selon l'invention comprennent une pluralité de mâchoires 45. Selon la variante de réalisation, le couvercle comprend 4 mâchoires de verrouillage. Le verrouillage des mâchoires 45 est réalisé sur l'épaulement 23 de la contre-cuve 2 par un mouvement de translation radiale des mâchoires 45. Le détail de l'interaction entre les mâchoires 45 et la contre-cuve 2 sera décrit ultérieurement en référence aux figures 3 et 4. L'actionnement des mâchoires est déclenché par la rotation d'une platine 41 montée sur le couvercle 4. La poignée 40 de préhension peut-être fixée sur la platine 41. Ainsi, la rotation de la poignée 40 provoque le verrouillage ou le déverrouillage des mâchoires 45 sur la contre-cuve de l'appareil. Pour éviter l'ouverture intempestive du couvercle après le verrouillage des mâchoires 45 sur la contre-cuve, un dispositif 43 de blocage est prévu sur le dessus du couvercle. Le dispositif 43 de blocage empêche la rotation de la platine et par conséquent le mouvement des mâchoires 45. Pour ouvrir le couvercle 4, le dispositif 43 de blocage doit être actionné pour libérer la platine 41 qui peut alors être manoeuvrée en rotation par l'intermédiaire de la poignée 40 de préhension du couvercle.

Des éléments 47 de décoration peuvent être fixés sur la circonférence du couvercle 4, entre les mâchoires 45 de verrouillage. Toutefois, les zones 46 situées à l'aplomb des poignés 31 de la cuve ne comprennent pas d'éléments de décoration pour laisser l'espace aux poignées 31 de la cuve 3.

Les éléments 47 de décoration et les zones 46 peuvent également être utilisés pour apporter un guidage pour faciliter le positionnement du couvercle 4, de même que l'indexation et le détrompage du couvercle 4.

Afin d'assurer le positionnement correct de la cuve 3 sur la contre-cuve 2, des moyens (non représentés) pour indexer la position du couvercle 4 peuvent être ajoutés. Ainsi, la contre-cuve 2 peut comprendre un ergot dans chaque méplat 22. Cet ergot est dimensionné pour venir se positionner dans l'anse des poignées 31 de la cuve 3. De cette façon tant que la cuve 3 n'est pas bien positionnée, il n'est pas possible de positionner le couvercle 4 et de verrouiller les mâchoires 45 sur la contre-cuve 2. De plus, les éléments 47 de décoration et les zones 46 peuvent permettre l'indexation du couvercle 4 sur la cuve 3 elle-même positionnée correctement dans la contre-cuve 2 grâce aux ergots. Ceci permet de bloquer le couvercle 4 en rotation ce qui facilite le verrouillage du couvercle 4 sur la contre-cuve 2.

Une autre alternative pour indexer la position du couvercle 4 sur le boîtier 1 consiste à former une encoche dans un ou plusieurs éléments 47 de décoration et un ergot ou un plot correspondant sur le bord supérieur 13 du boîtier 1. L'engagement du plot dans l'encoche assure le positionnement correct du couvercle 4 sur le boîtier 1 et empêche la rotation de couvercle lors de l'opération de verrouillage.

Le couvercle 4 comprend également un joint 48 (figures 3 et 4) sur la face intérieure. Ce joint assure l'étanchéité à la pression de l'enceinte de cuisson 30 lorsque le couvercle 4 est verrouillé sur la contre-cuve 2.

Selon une autre caractéristique plus visible sur les figures 3 et 4, les dimensions des poignées 31 de la cuve 3 sont choisies pour que celles-ci s'étendent au-delà du boîtier 1 de l'appareil. En d'autres termes, l'extrémité des poignées 31 de la cuve est plus éloignée de l'axe de l'appareil que le bord supérieur 13 du boîtier 1. Ainsi, l'utilisateur peut saisir facilement les anses des poignées 31 de la cuve 3 lorsque celle-ci est placée dans la contre-cuve 2 puisque les poignées 31 sont saillantes du boîtier 1.

Les figures 3 et 4 montrent également la position du joint 48 sur la surface intérieure du couvercle 4. Le joint 48 est circulaire et la section transversale du joint 48 est en forme de V. Le joint 48 est positionné sur le couvercle 4 pour venir en contact avec le bord supérieur de la cuve 3 lorsque le couvercle 4 est fermé. La pointe du V de la section du joint 48 est dirigée vers l'extérieur.

La figure 4 montre plus précisément l'interaction mécanique entre les mâchoires 45 de verrouillage et la contre-cuve 2. Selon la variante de réalisation proposée, la section transversale des mâchoires 45 est sensiblement en forme de U. Les deux branches du U sont dirigées vers l'axe de l'appareil et constituent les faces supérieure 452 et inférieure 451 de la mâchoire 45. Le fond 450 du U est parallèle à l'axe de l'appareil et correspond à la face visible de la mâchoire 45. En position de verrouillage, la face inférieure 451 de la mâchoire 45 est placée sous l'épaulement 23 de la contre-cuve 2 de sorte qu'il n'est plus possible de soulever le couvercle 4. La montée en pression à l'intérieur de l'enceinte de cuisson 30 tend à soulever le couvercle. Ce mouvement est bloqué par la position de la mâchoire 45. Comme expliqué précédemment l'étanchéité dans l'enceinte de cuisson 30 est assurée par le joint 48 du couvercle 4.

Comme indiqué précédemment la montée en température de l'enceinte de cuisson est assurée par un élément chauffant 25. L'élément chauffant 25 est de type connu en soi. A titre d'exemple, l'élément chauffant 25 est constitué d'un bloc d'aluminium dans lequel est noyée une résistance chauffante électrique.

Toutefois, un élément chauffant de type inductif pourrait être utilisé. Pour assurer une régulation en température de l'enceinte de cuisson 30, un capteur de température 55 est placé sur l'élément chauffant au niveau du fond et au milieu de la cuve 3.

L'élément chauffant 25 est également piloté pour réguler la pression à l'intérieur de l'enceinte de cuisson 30. La mesure de la pression dans l'enceinte de cuisson 30 est réalisée en mesurant la déformation du fond de la cuve 3. En effet, l'élévation de pression à l'intérieur de l'enceinte de cuisson 30 génère des contraintes mécaniques qui tendent à déformer le fond de la cuve 3. Ces contraintes mécaniques sont alors transmises au fond de la contre-cuve 2 au travers de l'élément chauffant 25. La déformation de la contre-cuve 2 est alors détectée par exemple par un capteur de déplacement 26. La valeur du déplacement mesuré est ensuite extrapolée en valeur de pression.

Les moyens de verrouillage vont à présent être décrits en référence à la figure 5. Afin de mieux comprendre le mécanisme de verrouillage de l'appareil le capot 49 de protection du couvercle, la poignée 40 et la platine ne sont pas représentés. Les moyens de verrouillage comprennent essentiellement les mâchoires 45, des tiges 54 de guidage et un dispositif de commande 50. Chaque face supérieure 452 d'une mâchoire 45 est montée mobile en translation sur le couvercle 4 par exemple par l'intermédiaire d'une tige 54. Une extrémité de la tige 54 comprend un plot 53 monté coulissant dans une rainure 52 du dispositif de commande 50. Le dispositif de commande 50 comprend une plaque 50 circulaire montée rotative sur le couvercle 4 selon l'axe de l'appareil. Le guidage en rotation de la plaque 50 est assuré par une nervure 51 en arc de cercle dans laquelle est engagé un plot fixe par rapport au couvercle. Ce guidage en rotation peut également être assuré par d'autres moyens comme par exemple par un guidage sur un axe central.

La forme de la rainure 52 dans laquelle coulisse le plot 53 de la tige 54 est sensiblement en S. Lors de la rotation de la plaque 50, le plot 53 va suivre le profil de la rainure 52 et provoquer la translation de la tige 54 et donc de la mâchoire 45 selon une direction radiale. La longueur de la rainure 52 et de la nervure 51 limite l'amplitude de rotation de la plaque 50. Dans l'exemple de réalisation proposé l'amplitude de rotation est d'environ 30° pour un déplacement en translation des mâchoires 45 de l'ordre de 1 cm. La plaque 50 sert de support à la platine 41, fig. 1 sur laquelle est fixée la poignée 40 de préhension du couvercle.

Le fonctionnement de l'appareil électrique de cuisson des aliments selon l'invention est le suivant. L'utilisateur introduit tout d'abord les ingrédients dans la cuve 3. Il peut le faire soit lorsque la cuve 3 est déjà en place dans le boîtier 1 soit lorsque la cuve est à l'extérieur. Dans ce dernier cas la cuve 3 est placée dans la contre-cuve 2 à l'aide des poignées 31. Ensuite, l'utilisateur ferme l'appareil en posant le couvercle 4 sur le bord 13 supérieur du boîtier 1, puis verrouille le couvercle 4 sur la contre-cuve 2 par une rotation de la poignée 40 de préhension du couvercle.

L'utilisateur peut ensuite choisir différents modes de cuisson par l'intermédiaire du panneau 12 de commande. A titre d'exemple, 4 types de cuisson peuvent être réalisés dans l'appareil, le rissolage, le dorage, la cuisson basse pression et la cuisson haute pression.

Le rissolage et le dorage se déroulent à pression atmosphérique. Pour ce faire la valve 42 de dépressurisation est en position ouverte, ou encore le couvercle est ouvert. La différence entre ces deux types de cuisson est la température de consigne de l'élément chauffant 25.

La cuisson sous pression nécessite la fermeture de la valve 42 de dépressurisation. L'élément chauffant 25 est régulé en fonction du niveau de pression régnant dans la cuve 3.

A l'issue de la durée de cuisson programmée par l'utilisateur les éléments chauffant sont arrêtés. L'utilisateur peut alors déverrouiller le couvercle 4 comme décrit précédemment. Une fois le couvercle 4 retiré, l'utilisateur peut enlever la cuve 3 en saisissant les poignées 31.

L'intérêt des poignées 31 sur la cuve 3 est double, d'une part la manipulation de la cuve est facilitée et d'autre part les risques de brûlure lors de la manipulation sont réduits.

## Revendications

1. Appareil électrique de cuisson sous pression pour aliments comprenant un boîtier (1) et un couvercle (4) formant l'enveloppe extérieure de l'appareil, une contre-cuve (2) formant l'enceinte intérieure de l'appareil, un élément chauffant (25) placé dans le fond de la contre-cuve (2), une cuve (3) amovible formant le récipient de cuisson (30) des aliments, **caractérisé en ce que** la cuve (3) comprend au moins une poignée (31) de préhension s'étendant au-delà de la périphérie du boîtier (1).

2. Appareil électrique de cuisson sous pression pour aliments selon la revendication 1 **caractérisé en ce que** le couvercle (4) comprend des moyens de verrouillage (41, 43, 45) sur la contre-cuve (2).

3. Appareil électrique de cuisson sous pression pour aliments selon la revendication précédente **caractérisé en ce que** les moyens de verrouillage comprennent au moins deux mâchoires (45) mobiles de façon radiale par rapport au couvercle (4).

4. Appareil électrique de cuisson sous pression pour aliments selon la revendication précédente **caractérisé en ce que** chaque mâchoire (45) est solidaire d'une tige (54) dont une extrémité est engagée dans un dispositif de commande (50) monté rotatif sur le couvercle (4).

5. Appareil électrique de cuisson sous pression pour aliments selon la revendication précédente **caractérisé en ce que** le dispositif de commande (50) est solidaire d'une poignée (40) de préhension du couvercle (4).

6. Appareil électrique de cuisson sous pression pour aliments selon l'une des revendications 2 à 5 **caractérisé en ce que** les moyens de verrouillage (41, 43, 45) comprennent un dispositif de blocage (43) en position verrouillée.

7. Appareil électrique de cuisson sous pression pour aliments selon l'une des revendications précédentes **caractérisé en ce que** le couvercle (4) est amovible.

8. Appareil électrique de cuisson sous pression pour aliments selon l'une des revendications précédentes **caractérisé en ce que** le couvercle (4) comprend un joint (48) prenant appui sur le bord (32) supérieur de la cuve (3) lorsque le couvercle (4) est fermé.

9. Appareil électrique de cuisson sous pression pour aliments selon l'une des revendications précédentes **caractérisé en ce qu'**il comprend un bac amovible (14) de récupération des condensats monté dans un logement (15) de la paroi latérale du boîtier (1).
